# EUROPEAN PATENT SPECIFICATION

(11) **EP 4 072 464 B1**
(45) Date of publication and mention of the grant of the patent: **24.07.2024**
(21) Application number: 20833947.3
(22) Date of filing: 10.12.2020
(51) Int. Cl.: A61C 8/00, A61C 13/235, A61C 13/265

(54) **DENTAL DEVICE**
ZAHNMEDIZINISCHE VORRICHTUNG
DISPOSITIF DENTAIRE

(30) Priority: 11.12.2019 IT 201900023703; 01.09.2020 IT 202000020830; 16.09.2020 IT 202000021826
(43) Date of publication of application: 19.10.2022
(73) Proprietor: Maet Sagl, 6830 Chiasso (CH); Di Edoardo, Emanuele, 20010 Pregnana Milanese (MI) (IT)
(72) Inventor: MASSANO, Daniele, 6900 Paradiso (CH); DI EDOARDO, Emanuele, 20010 Pregnana Milanese (MI) (IT)
(74) Representative: Lunati & Mazzoni S.r.L.
(86) International application number: PCT/IB2020/061734
(87) International publication number: WO 2021/116961

(56) References cited:
- WO-A1-02/24104
- DE-U1- 29 711 621
- US-B2- 9 603 681

## Description

The present invention relates to a dental device of the type specified in the preamble of the first claim.

In particular, the present invention relates to a dental device in use on users who need dental protheses and which is mainly placed in the field of implantology technique with fixed type prothesis.

A similar device is disclosed within patent document US-B-9603681.

As is known, in the dental field, prostheses are suitable for morpho-functional rehabilitation of dental arches with single, multiple or total edentulous.

In particular, in the dental field, the fixed prosthesis can be cemented to the osseo-integrated implant, but it can also be screwed directly to the same implant.

The fixed prosthesis on implants, starting from the eighties, or rather since modern implantology with Branemark's studies existed, has essentially never been modified while maintaining the fastening constraint, through cementation or screwing, with exclusively implant support and absolutely not gingival.

The known technique described includes some important drawbacks.

The current technique of fixing screwed or cemented prosthetic parts present some operational problems. In fact, it often does not allow the operational problems. In fact, it often does not allow the operator an easy removal of the prosthetic structures fixed to the implants since, in order to disassemble a tooth cemented to the abutment screwed into the implant, it is necessary to use extractors configured to hammer the prosthetic part causing, sometimes, the fracture of the same prosthesis and therefore causing substantial damage.

With particular reference to the technique with fixed implant type prostheses of the all-on-four type, although the techniques of implant insertion have changed since Branemark and Malò, the methods of fixing the prostheses to the implants have remained unchanged and, in this case, substantially made by mechanical screw joints.

Therefore, the protheses also known as Toronto, not only have not had an effective evolution, but have remained linked to the old drawbacks.

In detail, all-on-four type protheses do not allow the user to have adequate home hygiene, often leading to peri-implantitis that cause loss of implant posts.

Furthermore, from a dental point of view, the fixation of all-on-four prothesis is universally performed with titanium micro-screws which, due to the mechanical stress to which they are subjected, often cracks creating significant problems for the clinician and, consequently, for the patient or user.

In addition, this prosthetic rehabilitation induces the user to go to the clinic every six months for maintenance purposes. The apparatuses known to the current state of the art must, in fact, be disassembled in such a way as to release the prosthesis and be able to clean it especially in reference to the areas that it is impossible for the user to reach.

In these areas, if proper and timely maintenance is not carried out, peri-implant inflammation is often observed due, for example, to accumulations of food, plaque and tartar.

These drawbacks are therefore connected to the fact that the user cannot remove the prosthesis alone but needs a specialized dentist with further consequence that, in the event of mechanical breakage of the prosthesis, the user's life is conditioned, having to contact a specialized structure.

This need causes inconvenience both to the user who is conditioned in his daily life and to the operators who have to deal with immediate emergencies.

However, devices are known which implement particular couplings between the dental prothesis and the implant. In particular, some devices include magnetic couplings designed to allow the coupling and uncoupling of the prothesis from the implant by applying a pre-determined separation force, or by applying external tools that cancel the external magnetic attraction force.

Among the various devices that adopt more complicated solutions is the device described in US-B-6171107. The latter basically describes an implant on which a prosthesis of a tooth shaped as the coupling portion of the implant can be housed, wherein the implant includes two sliders housed inside guides and pushed outwards through springs. The prothesis therefore includes cavities suitable for housing at least part of the sliders. Basically, therefore, the coupling is achieved by repulsion force created by the springs that push the sliders into the cavities made in the prothesis.

The devices just described also have important drawbacks.

In the devices that include pure magnetic couplings, the magnets must be made with particular geometries in order to stabilize the prosthesis on the implant. Furthermore, the magnetic coupling force must be very high since the tooth can withstand high loads during, for example, chewing.

As regards the device described in US-B-6171107, the aforesaid drawbacks are substantially solved by the fact that the sliders block the prosthesis in a direction parallel to the gum. However, there are other important drawbacks.

In particular, the prothesis must necessarily be excavated to allow the containment of the portion of the implant suitable for making the coupling. In addition, the prosthesis must include additional cavities to allow the housing of the sliders. These characteristics involve high processing times and costs.

Furthermore, the fact of including springs of extremely reduced dimensions entails not only high costs for the production of the protheses, but also a higher probability of breaking the device.

The major drawback is, however, given by the fact that for both coupling and uncoupling it is necessary to place two magnets on the front and rear side of the prosthesis that allow to solve the constraint created by the springs. Basically, in fact, the sliders are magnetized so that, when approached to external magnets, they can be subjected to a magnetic force that is opposite and greater than the elastic force of the spring. In this way the sliders can be retracted within their guides, removing the constraint between the prosthesis and the implant.

Therefore, these measures imply that the device described in US-B-6171107 prevents the coupling and uncoupling of prostheses and implant in a short time. Basically, in this sense, among the drawbacks of the device there are still the known drawbacks for common mechanical connections in terms of maintenance.

A similar device is also described in patent application US-A-2016143713.

This application describes a dental device substantially including an abutment which can be fitted within a support incorporated in a prosthesis, inside which a hollow guide is obtained to whose interior a slider can translate.

The slider is then pushed toward the exit of the guide by a spring and is adapted, in particular, to create a constraint configuration in which the slider is inserted, due to the thrust of the spring, into a groove defined within the abutment.

The known technique just described also includes some important drawbacks.

In particular, in fact, the coupling between the slider and the groove as described in the patent document are not sufficiently stable. In fact, it has been found that by applying an extraction force of the dental prosthesis, or rather perpendicular to the direction of movement of the slider, it is possible that the prosthesis is removed from the abutment.

In addition, this mechanism is difficult to adapt to small toothing, since it is very complicated and expensive to apply extremely small springs which are capable of applying a sufficient coupling force on the slider.

In addition, the springs wear out and require continuous maintenance.

In this situation, the technical task underlying the present invention is to project a dental device capable of substantially obviating at least part of the aforementioned drawbacks.

Within the scope of said technical task, an important object of the invention is to obtain a dental device which has a fastening solution for the dental prosthesis which is advanced with respect to the known techniques taught starting from Branemark to Malò.

In particular, it is important that the aforementioned technical task be solved by allowing a device to be made which describes a relatively simple structure, which is very stable and which reduces the number of components necessary for its construction.

Another important object of the invention is to provide a dental device which allows easy assembly and disassembly of dental protheses from implant posts or similar structures.

As a consequence of this, a further purpose of the invention is to create a device that allows a user to independently remove the prostheses for maintenance purposes, while maintaining the same functional effectiveness of the fixed prosthesis.

Therefore, a further purpose of the invention is to obtain a dental device that reduces the complications due to emergencies inherent in any breakages or infections resulting from the use of the known technique.

The technical task and the specified aims are achieved by a dental device as claimed in the attached claim 1.

Preferred technical solutions are highlighted in the dependent claims.

The features and advantages of the invention are clarified below by the detailed description of preferred embodiments of the invention, with reference to the accompanying drawings, in which:
The **Fig. 1** shows an exploded view of an embodiment of a dental device according to the invention;
The **Fig. 2** illustrates a cross-sectional view, perpendicular to the constraint axis, of a dental device according to the invention in which the connection means are in the release configuration;
The **Fig. 3** is a front view of a dental device according to the invention wherein the connection means are in the constraint configuration;
The **Fig. 4a** represents a side sectional view of a dental device according to the invention in a preferred embodiment with magnetic elements in which the connection means are in the release configuration at a time prior to the realization of the constraint configuration;
The **Fig. 4b** shows a side sectional view of a dental device according to the invention wherein the connection means are in the constraint configuration;
The **Fig. 5** illustrates a second rear sectional view of a dental device according to the invention wherein the connection means are in the constraint configuration;
The **Fig. 6** is a perspective view of a graft of a dental device according to the invention in an alternative embodiment;
The **Fig. 7a** represents a side sectional view of a body of dental device according to the invention in an alternative embodiment compatible with the graft of Fig. 6;
The **Fig. 7b** shows a side view of a slider of a dental device according to the invention in an alternative embodiment compatible with the graft of Fig.6 and the body of Fig. 7a;
The **Fig. 7c** illustrates a side sectional view of the graft of Fig. 6;
The **Fig. 8** is a perspective view of a slider of a dental device according to the invention in the embodiment of Figs 1-5;
The **Fig. 9** represents a side sectional view of a dental device according to the invention in which the connection means are in the release configuration and the graft hole includes slanted side walls capable of allowing the decoupling of the connection means without the aid of external devices;
The **Fig. 10a** shows a side sectional view of a dental device according to the invention in an alternative embodiment with an elastic element in which the connection means are in the release configuration at a time prior to the construction of the constraint configuration;
The **Fig. 10b** illustrates a side sectional view of the dental device of Fig. 10a wherein the connection means are in a constrained configuration;
The **Fig. 11** is a side sectional view of a dental device according to the invention wherein the component does not entirely occupy the guide within which it is arranged;
The **Fig. 12** represents a side sectional view of a dental device according to the invention wherein the graft is mounted at an angle on the support;
The **Fig. 13** shows a cross-sectional view, perpendicular to the constraint axis, of a dental device according to the in C-shaped trajectory but are mutually separated;
The **Fig. 14** shows a front sectional view of a dental device known in the current state of the art;
The **Fig. 15a** is a side sectional view of a dental device according to the invention in an alternative embodiment with the component that exerts a magnetic repulsion force on the slider and is arranged on the bottom of the guide, facing it, and the connection means are in the release configuration at a time prior to the construction of the constraint configuration; and
The Fig. **15b** represents a side sectional view of the dental device of Fig 15a wherein the connection means are in a constrained configuration.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

The measurements and data reported in this text are to be considered, unless otherwise indicated, as performed in the International Standard Atmosphere ICAO (ISO 2533:1975).

With reference to the drawings, dental device according to the invention is globally indicated with the number **1.**

The device 1 is preferably substantially a dental implant capable of allowing the rehabilitation of at least part of the edentulous dental arches.

In detail, it is preferably of the fixed prosthesis type and partially includes implant parts known to the state of the art.

The device 1 comprises at least one support **2** and connection means **3.**

The support 2 is of the implant type and, therefore, configured to be constrained on a bone portion of a user.

Basically, the support 2 is, for example, a common implant used in the all-on-four technique. Therefore, it can include a stem including one or more diaphragms surrounding the stem and designed to allow the block, by friction, of the support 2 inside a bone portion in the mandibular area of a user.

Substantially, therefore, the support 2 has a structure substantially similar to the structure of a common wall plug.

Naturally, the materials that make up the support 2 are biocompatible.

In any case, the support 2 defines a main axis **2a.**

The main axis 2a can substantially coincide with the prevailing development axis of the support 2. It can, for example, be a central axis of the support 2 when the support defines a shape very similar to a cylinder or a truncated cone.

Furthermore, the support 2 defines a constraint axis **3a.**

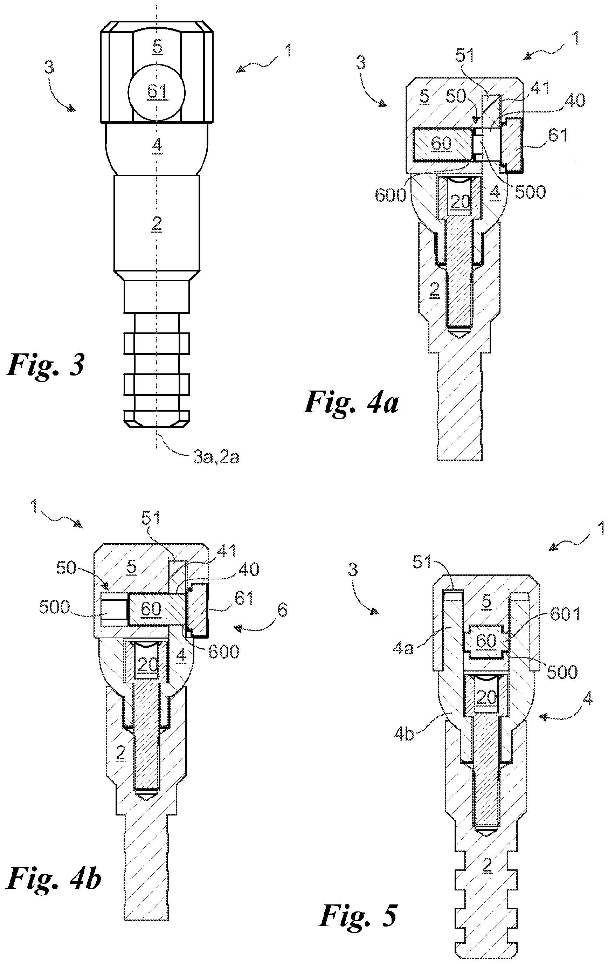

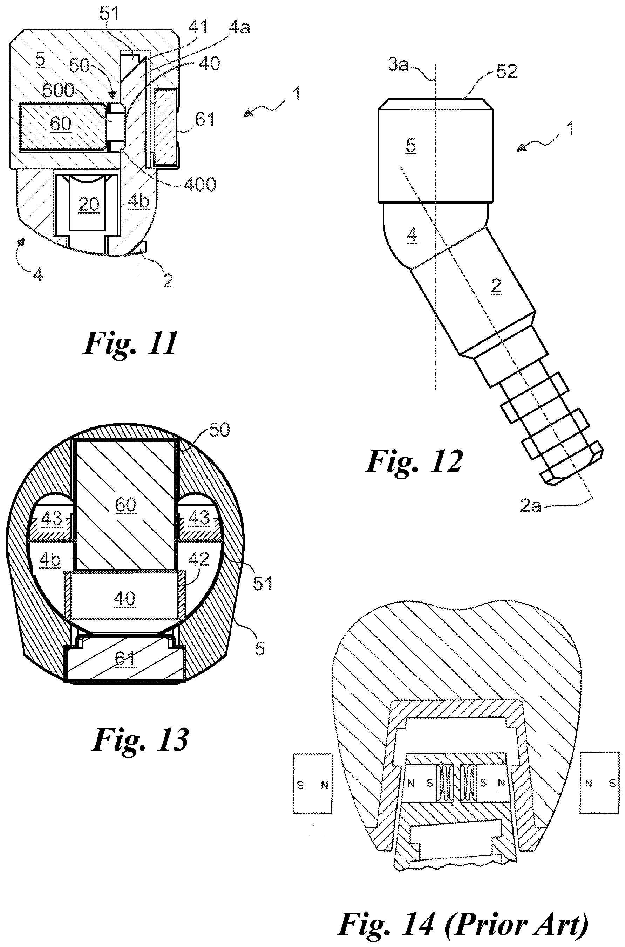

The constraint axis 3a is preferably the direction along which the components of the device 1 are mounted. The constraint axis 3a can be aligned with the main axis 2a, as shown in Fig. 3, or it can be slanted with respect to it, as shown in Fig. 12.

The connection means 3, on the other hand, are configured to operatively interconnect the support 2 and a prosthesis **10.** In particular, the connection means 3 constrain the support 2 and the prosthesis 10 in a fixed manner and along the constraint axis 3a.

The prosthesis 10 is preferably a dental prosthesis. Therefore, it can be a prosthesis that defines an entire dental arch, or a part of dental arch, or even a single tooth or part of it.

The prosthesis 10 is also bound to at least part of the connection means 3 with conventional methods, or rather with methods already widely used in techniques such as the Toronto technique.

Basically, the prosthesis 10 can be constrained by gluing, by means of particular constraining means such as micro screws and bolts, by interlocking, by screwing, or by other known techniques.

Basically, the constraint method between the prosthesis 10 and the connecting means 3 is not the subject of the present invention since it is widely known.

In general, the connecting means 3 defines at least one constraint configuration. In the constraint configuration the support 2 and the prosthesis 10 are firmly constrained to each other.

With the term firmly constrained, it is meant that the prosthesis 10 is blocked with respect to the support 2 and can only move integrally with the support 2.

Naturally, the connection means 3 also provide one or more release configurations. In particular, in at least one release configuration, the support 2 and the prosthesis 10 are mutually movable at least along the constraint axis 3a.

This configuration is, for example, realized when the connection means 3 are in the coupling phase, or rather just before the constraint configuration is made. Obviously, in other release configurations, the prosthesis 10 and the support 2 are mutually movable in any direction.

The connection means 3 therefore comprise a graft **4** and a body **5.**

The graft 4 and the body 5 are configured to be coupled together in such a way as to achieve the constraint configuration.

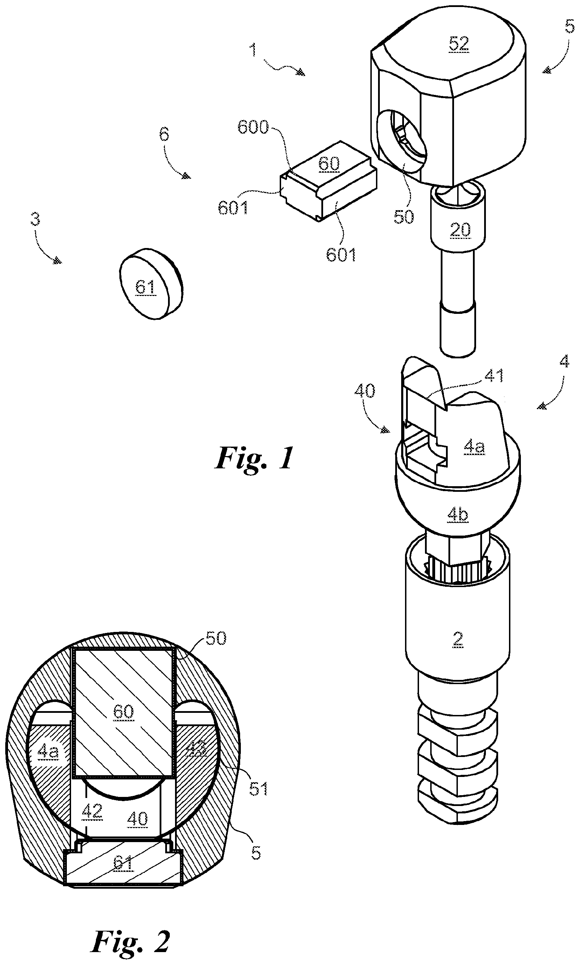

Therefore, one of the grafts 4 and the body 5 is bound to the support 2 and the other between the graft 4 and the body 5 is configured to be bound to the prosthesis 10. In this regard, in particular, the graft 4 or the body 5 constrained to the support 2 can include a perforated base configured to be coupled with the support 2 in a conventional manner, for example by means of fixing screws **20** as clearly shown in Fig. 1.

The graft 4 or the body 5 configured to be attached to the prothesis 10 may include a flat area designed to allow, for example, the bonding of the prosthesis 10 on the graft 4 or the body 5, facilitating its support.

These examples are not, of course, binding, but are simple examples of how the connections between graft 4 or body 5 with the support 2 and/or the prothesis 10 can be made.

The graft 4, in particular, includes at least a first portion **4a** which develops mainly along a direction parallel to the constraint axis 3a. in this sense, the first portion 4a preferably comprises a first flap **42** which develops in a direction parallel to the constraint axis 3a.

Said flap 42 defines, therefore, a wall extending along the constraint axis 3a. However, the first portion 4a could include second flaps 43, arranged on the sides of the first flap 42 and protruding, also, along the constraint axis 3a.

In detail, preferably, the first portion 4a defines a substantially C shaped wall in section perpendicular to the constraint axis 3a.

This C shaped section can be made in various ways: the flaps 42, 43 can be connected to each other and the section can be a solid C, or a U, or similar shape. Alternatively, the tabs 42,43 can be separated from each other, and be arranged along a C-shaped trajectory, as shown in Fig. 13.

This C-shaped section can therefore have a substantially semicircle shape, or it can include a more or less extended arc. For example, the C-section can extend as an arc of a circle subtending an angle of 260°, as shown in Fig. 2.

However, the graft 4 could also include only the first flap 42, for example with a rectangular base in section perpendicular to the constraint axis 3a.

In any case, the graft 4 is configured to be inserted at least partially within the body 5 at least along the constraint axis 3a. The graft 4 is configured, even more in detail, so that the first portion 4a is entirely inserted within the body 5 along the constraint axis 3a.

In addition to what is mentioned, the first portion 4a comprises also a hole **40.** The hole 40 preferably extends in a transverse or oblique direction with respect to the constraint axis 3a. In particular, preferably, the hole 40 extends perpendicular to the constraint axis 3a.

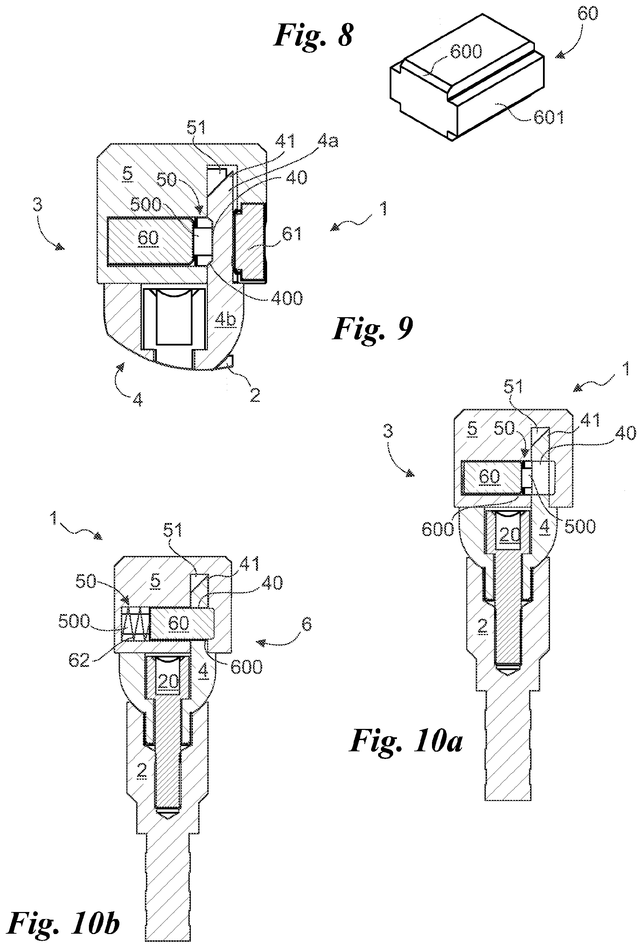

The hole 40 can also be through or a non-through hole. In this sense, if the hole 40 is non-through, it can substantially be a groove made on the wall defined by the first portion 4a, as shown in Figs. 9 and 11. If hole 40 passes through, it pierces the C-shaped wall or tab from side to side. If the first portion 4a defines a C-shaped wall, preferably, the hole 40 is arranged in the central area of the C, or rather in correspondence with the first flap 42.

Furthermore, the first portion 4a defines a free end **41.**

The free end 41 is the graft portion furthest away from the coupling area with the support 2 or with the prosthesis 10. Therefore, the free end 41 is the terminal part of the first portion 4a, or rather the tip of the flap 42 or the flaps 42, 43 defined by the graft 4.

Preferably, the free end 41 is wedge-shaped. The term wedge means that the first portion 4a defines, at the free end 41, a tip made with, for example, a cut directed transversely or slanted with respect to the wall extending along the constraint axis 3a.

The body 5 is, as mentioned, able to house at least partially the graft 4 and, in particular, to totally house the first portion 4a.

Therefore, it comprises at least one cavity **51.**

The cavity 51 extends in a direction parallel to the constraint axis 3a when the connection means 3 are in the constraint configuration. By this it is meant that the geometric description of the cavity 51, and of other parts subsequently described, is carried out for simplicity considering the constraint configuration. Naturally, when the body 5 is moved away from the graft 4, it is no longer integral with the graft 4 and the cavity 51 can extend in any direction.

In any case, the cavity 51 is adapted to house the first portion 4a. To this end, the cavity 51 can be oversized with respect to the first portion 4a. Or it can be counter-shaped with respect to the first portion 4a itself. For example, when the first portion 4a defines a C-section, the cavity can also define a C-section. This configuration is, in particular, very stable both in translation and in rotation.

The body 5, however, is preferably configured to house other objects.

It therefore also includes a guide **50.**

The guide 50 extends along a transverse or oblique direction with respect to the constraint axis 3a, when the connection means 3 are in the constraint configuration. The guide 50 can therefore define an entirely through hole inside the body 5. Or, the guide 50 can define a partially through hole defining an opening and a bottom. The guide 50 can also take various forms, mainly depending on the type of object to be housed inside. Some preferred but non-limiting embodiments are subsequently described.

In any case, the guide 50 and the hole 40 are configured to be aligned when the connection means 3 are in the constraint configuration.

Furthermore, preferably, the hole 40 has dimensions similar to the guide 50 and can also have similar shapes.

The connection means 3 also comprise obstruction means **6.**

The obstruction means 6 are adapted to block the reciprocal movement between the coupling 4 and the body 5. Therefore, they block the two elements in order to achieve the constraint configuration.

The obstruction means 6, in particular, are configured to block the first portion 4a inside the cavity 51. They could, therefore, also include simple interlocking elements that cannot be resolved.

However, preferably, the obstruction means 6 are preferably configured in such a way that they can be resolved on command.

The obstruction means 6 comprise a slider **60.**

The slider 60 is housed in a constraint way inside the guide 50. In particular, preferably, the slider 60 is preferably housed in correspondence with the bottom area of the guide 50.

Furthermore, the obstruction means 6 are configured to exert a force on the slider 60 able to move the slider along the guide 50 in such a way that at least part of the slider 60 enters the hole 40.

In this way, the slider 60 interferes with the mutual movement between the graft 4 and the body 5 and the connection means 3 define the constraint configuration.

In particular, the force exerted on the slider 60 to move it is of the magnetic type. Therefore, the obstruction means 6 are configured to produce a magnetic force on the slider 60. This magnetic force can, moreover, be an attraction or repulsion force as better described later. Even more preferably, the force exerted on the slider 60 can be exclusively a magnetic force.

The obstruction means 6 comprise a component **61.**

The component 61 is constrained within the body 5. In particular, the component 61 is constrained within the body 5 at the opening of the guide 50. Substantially, therefore, the component 61 forms a cap for the guide 50.

The component 61 can be interlocked in the body 5, or it can be removable with respect to it. Therefore, the slider 60 could also be removed from the body 5 when the connection means are in the release configuration.

Preferably, the component 61 is constrained within the body 5 in such a way as to be facing the guide 50 and separated with respect to the guide 50 by the cavity 51.

Basically, the cavity 51 intersects the guide 50 and cuts it into two portions which respectively house the slider 60, or part of it, and the component 61.

The component 61 could therefore occupy the entire guide portion 50 in which it is housed, or it could partially house it in such a way as to allow the slider 60, when the connection means 3 are in a constrained configuration, to be partially arranged within the guide 50 also from the part adjacent to the component 61, as shown in Fig. 11.

As already mentioned, the guide 50 and the hole 40 are aligned when the connection means 3 are in the constraint configuration. In this way, they are able to allow the insertion of the slider 60 into the hole 40. The slider 60 can be partially housed in the hole 40, for example when the latter is not passing through, or it can pass through the hole 40.

Advantageously, the component 61 is configured, in at least one embodiment, to achieve a magnetic force of mutual attraction with the slider 60. In this regard, one or both of the component 61 and the slider 60 can be magnetized, or one of them can be magnetically reactive, for example at least partially comprising metallic material. For example, the slider 60 may include a central neodymium portion coated with a titanium carbide coating. Or the coating can include a hard stone, for example ruby, to increase its smoothness inside the guide 50 and reduce friction. In turn, the component 61 may also include a magnet coated with titanium carbide or other useful materials.

In this embodiment, the slider 60 and the component 61 mutually attract at least in the constraint configuration.

Preferably, the component 61 is able to remain rigidly constrained to the body 5, while the slider 60 moves towards the component 61.

Basically, when the constraint means 3 are in the constraint configuration, the slider 60 is dragged towards the component 61, it enters the hole 40 and obstructs the reciprocal movement between the graft 4 and the body 5.

The support 2 and the prothesis 10 can therefore be stably constrained to each other.

The insertion of the slider 60 into the hole 40 depends, as already described, on the shape of the hole 40. If the latter is non-through and defines a simple groove on the wall of the first portion 4a, the slider 60 approaches only the component, but sufficiently to block the mutual translation between the graft 4 and the body 5 along the constraint axis 3a.

If, on the other hand, the hole 40 is a through hole, the slider 60 is dragged flushed with the component 61 and passes through the hole 40.

The free end 41 and the slider 60 also define particular measures to facilitate the coupling of graft 4 and body 5.

In fact, in a configuration of total release, the slider 60 can be flushed on the component 61, if present on the body 5, before the first portion 4a is inserted in the cavity 51.

However, the free end 41 is configured to separate the slider 60 and the component 61 when the first portion 4a is inserted into the cavity 51. Substantially, the tip of the free end 41 impacts on the slider 60 and, while the first portion 4a advances into the cavity 51, forces the slider 60 to move back along the slanted plane defines on the free end 41 with respect to the wall of the first portion 4a, in detail for example of the flap 42.

To facilitate retraction, the slider 60 can also define some important characteristics. In particular, the slider 60 can define a bevelled tip edge **600.** This edge 600 is, therefore, preferably configured to facilitate the introduction of the free end 41 between the slider 60 and the component 61.

Basically, the bevelled edge 600 allows you to define a hole between slider 60 and component 61 inside which you can insert the tip of the wedge of the free end 41. As already mentioned, the guide 50, the hole 40 and the slider 60 can, in particular, define some different embodiments.

For instance, in a preferred embodiment, the guide 50 can be a cylindrical pipe, the hole 40 can have a conical body shape and the slider 60 can comprise a cylindrical body compatible with the guide 50 and a conical body tip configured to fit into hole 40.

If present, the bevelled edge 600 is arranged at the conical body tip.

In an alternative embodiment, the guide 50 can be a pipe with a mainly parallelepiped shape with rectangular base, the hole 40 can also have a predominantly parallelepiped shape with a rectangular base and the slider 60 can substantially comprise a body with a mainly parallelepiped shape with rectangular base compatible with guide 50 and hole 40.

In this second embodiment, moreover, the guide 50 can comprise one or more notches **500.** The notches 500 are substantially grooves, preferably rectilinear, adapted to form sliding tracks for the slider 60.

In turn, the slider 60 can comprise one or more wings **601.** The wings 601 can be simple straight lateral protuberances of the slider 60.

Mainly, the wings 601 are configured, if present, to be housed and to translate in a controlled manner within one or more notches 500.

In the preferred embodiment, the graft 4 is configured to be attached to the support 2 and the body 5 to the prosthesis 10.

Therefore, in this embodiment, the body 5 defines a hooking surface **52.** The hooking surface 52, preferably flat, is configured to allow the stable attachment off the prosthesis 10.

The graft 4, in this embodiment, comprises a second portion **4b.** The second portion 4b is a base or support configured to allow the mutual constraint of graft 4 and support 2. Said second portion 4b preferably substantially defines an annular element defining a fixing hole **44.**

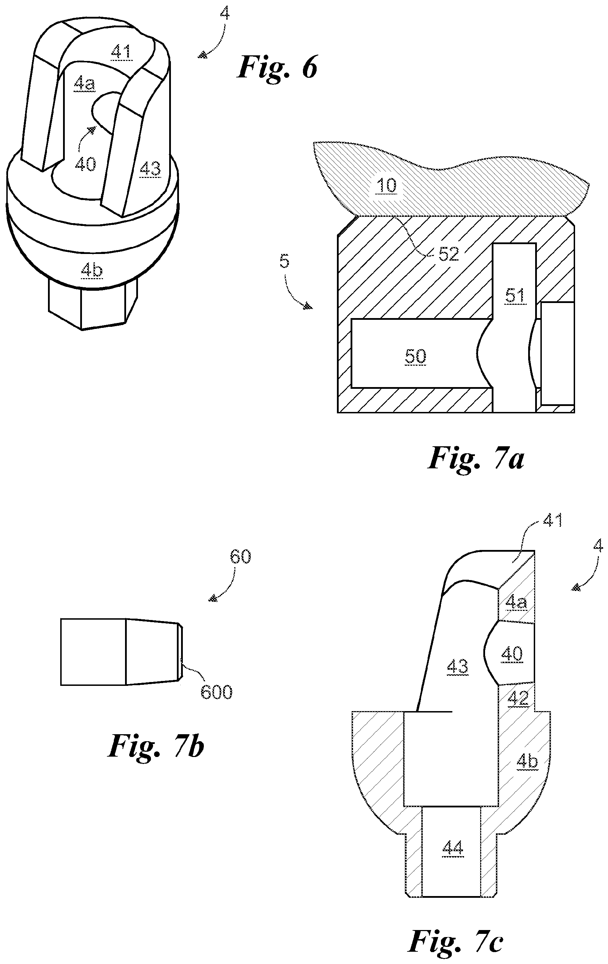

The fixing hole 44, shown in Fig. 7c, is preferably a through hole along the second portion 4b centred along the main axis 2a designed to allow the housing of part of the fixing screw 20, in particular the head. The constraint axis 3a can therefore be aligned with the main axis 2a or it can develop along a direction transverse or slanted with respected to the main axis 2a, as shown in Fig. 12. Therefore, the fixing screw 20 can be substantially housed bias inside the second portion 4b.

When the fixing hole 44 is slanted with respect to the constraint axis 3a, it may be necessary to use fixing tools, such as screwdrivers on the bias.

The first portion 4a is advantageously configured to be arranged around part of the fixing hole 44, whether it is with a C-section or even just a flap 42.

In this way, the operator can easily constrain the coupling 4 to the support 2 by easily tilting, and in any direction, the screwdriver since the first portion 4a occupies only a part of the space around the fixing hole 44.

Furthermore, in an alternative embodiment, the force that pushes the slider 60 along the guide 50 in the position in which the connection means 3 realize the constraint condition, could be exerted by an elastic element **62.**

If present, the elastic element 62 is arranged, for example, between the bottom of the guide 50 and the slider 60.

Substantially, therefore, the slider 60 could be subjected to a repulsion force, with respect to the bottom of the guide 50, aligned with the guide and able to push the slider 60 towards the hole 40, as shown in Figs 10a-10b showing an embodiment which is not part of the claimed invention.

The last embodiment can likewise be realized by the slider 60 and by the component 61.

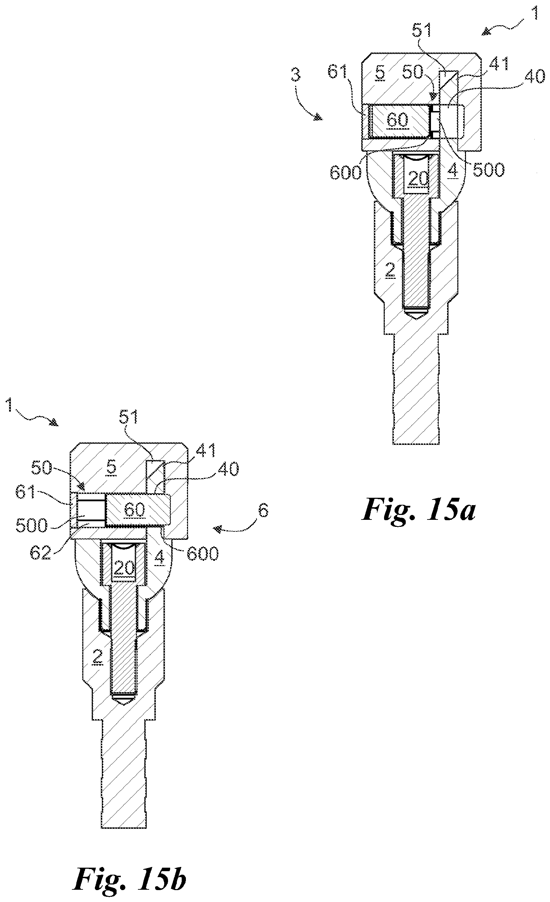

Also, in this case the component 61 is included within the body 5. It can be included, in particular, on the bottom of the guide 50. Or, the component 61 can close the guide 50 as if it were a plug. Furthermore, the component 61 can be constrained to the body 5, for example embedded in it, or it can be removably constrained to the bottom of the guide 50 or itself form the bottom of the guide 50, as shown in Figs. 15a-15b.

In any case, in the embodiment just described the magnetic force exerted between the component 61 and the slider 60 is a repulsive force.

The main advantage of this embodiment is to avoid the use of the spring which, in cases for example where the body 5 is of reduced size, may be substantially not possible.

In general, therefore, the component 61 is constrained within the body 5 in such a way as to be facing, or part of, said guide 50 and configured to provide a magnetic force of mutual attraction or repulsion with the slider 60 so that, when the fastening means 3 are in the fastening configuration, the slider 60 is dragged towards or away from said component 61, it enters the hole 40, whether it is through or not, and obstructs the reciprocal movement between the graft 4 and the body 5. Furthermore, also in this configuration, the hole 40 can be through and not through. The through hole 40 is preferable, even if not necessary, since it has the advantage of strengthening the constraint between the body 5 and the graft 4 in any embodiment. With the though hole 40, the slider 60 passes through the hole 40, passing through said first portion 4a. The transition occurs both when the slider 60 is dragged flushed with the component 61, by virtue of the magnetic force of attraction, and when the slider 60 is moved away from the component 61, by virtue of the magnetic repulsion force, and when the slider 60 is moved away from the bottom of the guide 50 by elastic element 62, by virtue of the elastic repulsion force. The operation of the dental device 1 previously described in structural terms is as follows.

The clinical operator, after having installed the supports 2 on the bone portions of a user, can constrain a prosthesis 10 on part of the connection means 3, for example at the base of the graft 4 or of the body 5.

The operator can then insert part of the graft 4 into the body 5.

In this situation, inter alia, two different situations can arise.

If the obstruction means 6 are pre-installed within the body 5, then the slider 60 is flushed the component 61 or parts of the body 5. However, upon insertion of the first portion 4a, the slider 60 is moved away from, or brought closer to, the component 61 by means of the free end 41 of the graft 4. The first portion 4a is therefore free to continue its stroke within the cavity 51 and, when the wall protruding along the constraint axis 3a is entirely housed in the cavity 51, the guide 50 and the hole 40 are aligned.

Therefore, the slider 60 can return into the hole 40 and/or flushed with the component 61. In this way, the slider 60 obstructs the travel of the first portion 4a inside the cavity 51 and the connection means 3 are in a constraint configuration.

Naturally, if the slider 60 is pushed by the component 61 or by the elastic element 62, the slider 60 can return within the hole 40 and/or flushed with a wall of the body 5, as shown in Fig. 10a-10b and 15a-15b. Also, in this case, the slider 60 obstructs the travel of the first portion 4a within the cavity 51 and the connection means 3 are in a constrained configuration.

In this case, the dental device according to the invention makes it possible to carry out a new assembly process.

The process can therefore include at least an arrangement phase and a constraint phase.

In the arrangement phase, the first portion 4a enters part of the cavity 51 in a release configuration in such a way that the first portion 4a pushes the slider 60 away from or towards the component 61.

During the insertion phase, the first portion 4a is totally inserted inside the cavity 51 in such a way that the guide 50 aligns with the hole 40 and the slider 60 is dragged towards or away from said component 61 and enters the hole 40 and obstructs the reciprocal movement of the graft 4 and the body 5.

In the embodiment in which the component 61 is separated with respect to the guide 50 by the cavity 51, the first portion 4a pushes the slider away from the component 61 in the arrangement phase and, in insertion phase, the slider 60 is dragged towards component 61.

In the embodiment in which the component 61 faces the guide 50, or part of it, the first portion 4a pushes, in the arrangement phase, the slider towards the component 61 and, in the insertion phase, the slider 60 moved away from component 61. Therefore, the graft 4 could be entirely housed in the body 5 or only partially.

Of course, in fact, if the graft 4 is provided with a second portion 4b for the connection with the support 2, as shown for example in Figs. 1-9, part of the graft 4 remains external to the body 5.

It is important to note that the wedge-shaped free hand 41 is not essential for the invention. In fact, the coupling could be carried out, in this situation, with the help of an external device.

This external apparatus can be an element capable of realizing a force of attraction, or repulsion, on the slider 60 greater than the force of attraction, or repulsion, exerted by the component 61.

In this sense, the external apparatus can also be a simple magnet.

Preferably, with this mode of use, the operator can bring the magnet near the bottom of the guide 50, on the external surface of the body 5, in such a way as to make the slider 60 move away from, or approach, the component 61 and allow the insertion of the first portion 4a in the body 5 without obstructions.

Therefore, the aforementioned assembly process may not include the disposition phase, but may include a preparation phase.

In the preparation phase, an external apparatus configured to exert a magnetic force on the slider 60, greater than the magnetic force exerted between the slider 60 and the component 61, is arranged at the bottom of the guide 50 so as to make the slider 60 move away from the component 61 and allow the insertion of the first portion 4a. Naturally, in the presence of obstruction means 6 provided with an elastic element 62 and without a component 61, the external apparatus could exert a magnetic attraction force on the slider 60 such as to overcome the elastic repulsion force with respect to the bottom of the guide 50 and cause moving back of the slider 60 in such a way as to define a retraction configuration.

The use of the external apparatus is, however, relevant for the subsequent decoupling of the slider of the connection means 3, once the slider 60 is inserted into the hole 40, or rather once the first constraint configuration has been made.

In this sense, in fact, the decoupling process could include at least one extraction step wherein an external apparatus configured to exert a magnetic force on the slider 60, greater than the magnetic force exerted between the slider 60 and the component 61, is arranged in correspondence of the bottom of the guide 50 so as to make the slider 60 move away from the component 61 and allow extraction of the first portion 4a.

However, the decoupling method is not necessary and could be overcome, by making holes defining side walls **400** slanted, with respect to the direction of alignment of guide 50 and the hole 40, configured to allow, as occurs with the wedge-shaped free end 41, the thrust of the slider 60 away from the component 61 by applying a force in the main axis direction 2a so as to overcome the friction exerted by the side walls 400 of the holes on the surface of the slider 60 in relation to the magnetic attraction force produced by the slider 60 and component 61.

An example of this configuration is shown in Fig. 9.

Therefore, the decoupling process could include a removal step wherein a thrust force is exerted on the body 5 or on the graft 4 along the constraint axis 3a higher than the component parallel to the constraint axis 3a of the friction force exerted by the slanted side walls 400 of the hole 40 on the slider 60 in proportion to the force of mutual attraction or repulsion between slider 60 and component 61.

In the configuration wherein the slider 60 is pushed towards the hole 40 by the elastic element 62, the first component 61 is preferably not present, but the elastic force to which the slider 60 is subjected can equally be overcome by the configured external apparatus to exert a magnetic force opposite and greater than the elastic force.

In a second situation, however, the obstruction means 6 could not be pre-assembled with the body 5 or could be only partially.

Therefore, an operator could insert the slider 60 into the guide 50, subsequently could completely insert the first portion 4a into the cavity 51 and then could plug the guide 50 with the component 61 so as to attract the slider 60 towards the component 61 and mutually lock the graft 4 and the body 5.

Alternatively, the component 61 could be inserted in the guide 50 in such a way as to plug the same following the insertion of the slider 60 in the same guide 50, so as to achieve the embodiment shown in Figs. 15a-15b.

Therefore, the invention allows to realize a new second assembly process.

This second method therefore comprises a first insertion step, a second insertion step and a locking step.

In the first insertion, the slider 60 is inserted inside the guide 50 so that it does not obstruct the cavity 51.

If the obstruction means are provided with an elastic element 62, the elastic element 62 can also be inserted, before the slider 60, inside the guide 50 in this phase. Naturally, the same component 61 could be inserted in the guide 50, as well as for the elastic element 62, before the slider 60.

In the second insertion step, the first portion 4a is totally inserted into the body 5 so that the guide 50 and the hole 40 are mutually aligned.

In the locking phase, the component 61 is constrained to the body 5, preferably in correspondence with the opening of the guide 50 in such a way as to plug the guide 50 itself and drag the slider 60 into the hole 40 and mutually lock the graft 4 and the body 5. The slider 60 can be dragged into the hole 40 by attraction or repulsion depending on where the component 61 is arranged.

The dental device 1 according to the invention achieves important advantages.

In fact, the dental device 1 has a completely evolved fixing solution with respect to the solutions existing at the current state of the art and which involve specific processing by a professional operator.

In detail, the most significant advantage is given by the fact that the assembly and disassembly of the connection means 3 is very quick and doe not require special skills.

Therefore, the device 1 allows any user to carry out more frequent maintenance cycles in total autonomy with respect to specialized centres.

As a consequence of this, another important advantage is given by the fact that both the probability of infection of the user's gum and the number of emergencies related to the onset of such infections are reduced.

It is important to underline that the dental device 1 allows to obtain a removable dental prosthesis having the same efficiency, in terms of stability, of the fixed prostheses, but without having to resort to mucosal support, but exclusively implant. Furthermore, in the face of an extremely efficient coupling, the conformation of the graft 4 allows to vary the inclination of the constraint axis 3a with respect to the main axis 2a, with the consequence that, without impediments, it is possible to create inclined implants, as shown in Fig. 12.

In conclusion, the device 1 allows, as in an entirely magnetic configuration, to avoid the use of springs that can lead to significant problems of longevity and maintenance of the device itself.

Furthermore, the fact of providing a magnetic thrust on the slider and providing that the latter is inserted into a through hole implies a very high efficiency of the dental device 1 which, in any case, can be removed from mandible or maxillary bone structure without the use of external magnetic or electromagnetic means. The invention is susceptible of variants falling within the scope of inventive concept defined by the claims.

For example, the guide 50 could be open on both sides and not have a bottom. In this configuration, the device 1 could include caps designed to allow, when required, the obstruction of the guide 50.

Furthermore, the device 1 could also comprise a hybrid embodiment wherein the elastic element 62 and the component 61 coexist. Furthermore, the elastic and magnetic forces, respectively realized by the elastic element 62 and component 61, could collaborate or be configured to work in opposition, for example, depending on the side on which the component 61 is positioned or its polarization with respect to the slider 60.

In this context, all the details can be replaced by equivalent elements and the materials, shapes and dimensions can be any.

## Claims

1. Dental device (1) comprising at least:
- an implant type support (2) configured to be constrained on a bone portion of a user and defining a constraint axis (3a),
- connection means (3) configured to operatively interconnect said support (2) and a dental prosthesis (10) in a fixed manner along said constraint axis (3a), defining at least one constraint configuration wherein said support and said prosthesis (10) are firmly linked, and include:
- a graft (4) comprising at least a first portion (4a) extending mainly along a direction parallel to said constraint axis (3a),
- a body (5) comprising a guide (50) extending along a transverse or oblique direction with respect to said constraint axis (3a) and a cavity (51) extending in a direction parallel to said constraint axis (3a) and adapted to house said first portion (4a) at least when said connection means (3) are in said constraint configuration,
- obstruction means (6) comprising a slider (60) placed in a compliant way within said guide (50),
- one of the said graft (4) and said body (5) being constrained to said support (2) and the other between said graft (4) and said body (5) being configured to be constrained to said prosthesis (10),
- said first portion (4a) comprising a hole (40) substantially aligned with said guide (50), when said connection means (3) are in constrained configuration, in such a way as to allow the insertion of said slider (60) within said hole (40),
- said obstruction means (6) being configured to produce a force on said slider (60) capable of moving said slider (60) along said guide (50) in such a way that at least part of said slider (60) enters hole (40), when said connection means (3) form said constraint configuration, so as to obstruct the reciprocal movement between said graft (4) and said body (5)
and said device (1) being **characterized by** that
- said force realized on said slider (60) is a magnetic force of attraction or repulsion and said obstruction means (6) comprise a component (61) constrained within said body (5) in such a way as to be facing, or part of, said guide (50) and configured to realize said magnetic force of mutual attraction or repulsion with said slider (60) so that, when said constraining means (3) are in said constraining configuration, said slider (60) is dragged towards or away from said component (61), it is inserted into said hole (40) and obstructs the reciprocal movement between said graft (4) and said body (5).

2. Device (1) according to claim 1, wherein said component (61) is constrained within said body (5) in such a way as to be facing said guide (50) and separated from said guide (50) by said cavity (51) realizing said magnetic attraction force with said slider (60).

3. Device (1) according to claim 1, wherein said component (61) closes or is part of said guide (50) and realized said magnetic repulsion force with said slider (60).

4. Device (1) according to any preceding claim, wherein said hole (40) is a through hole so that when said connection means (3) are in constraining configuration, said slider (60) passes through said hole (40).

5. Device (1) according to any preceding claim, wherein said hole (40) is non-through and defines a groove realized on a wall defined by said first portion (4a).

6. Device according to any preceding claim, wherein said first portion (4a) defines a wedge-shaped free end (41) configured to separate said slider (60) and said component (61) or said slider (60) and part of said body (5) when said first portion (4a) is inserted into said cavity (51).

7. Device according to any preceding claim, wherein said graft (4) comprises at least a first flap (42) defining a wall extending in a direction parallel to said constraint axis (3a) and including said hole (40).

8. Device according to any preceding claim, wherein said obstruction means (6) comprise said first (4a) which defines a wall with a substantially C or U shape in section perpendicular to said constraint axis (3a) and said cavity (51) is counter-shaped to said first portion (4a).

9. Device according to any preceding claim, wherein said slider (60) defines a bevelled tip edge (600) configured to facilitate the introduction of said free end (41) between said slider (60) and said component (61) or between said slider (60) and a portion of said body (5).

10. Device according to any preceding claim, wherein said guide (50) is a cylindrical pipe, said hole (40) has a conical body shape and said slider (60) comprises a cylindrical body compatible with said guide (50) and conical body tip configured to fit into said hole (40).

11. Device according to any preceding claim, wherein said guide (50) is a pipe with a predominantly parallelepiped shaped with a rectangular base, said hole (40) has a predominantly parallelepiped shape with a rectangular base and said slider (60) substantially comprises a body mainly parallelepiped shape with rectangular base compatible with said guide (50) and with said hole (40).

12. Device according to any preceding claim, wherein said guide (50) comprises one or more notches (500) and said slider (60) comprises one or more wings (601) configured to be housed and translated in a controlled manner within said one or more notches (500).

13. Device according to any preceding claim, wherein said support (2) defines a main axis (2a) coinciding with the prevailing development axis of said support (2) and said graft (4) comprises a second portion (4b) defining an annular element including a through fixing hole (44) centred along said main axis (2a), said constraint axis (3a) being aligned or slanted with respect to said main axis (2a).

## Patentansprüche

1. Zahnartzvorrichtung (1), umfassend mindestens:
- eine Implantatstütze (2), die konfiguriert ist, an einem Knochenabschnitt eines Benutzers befestigt zu werden und eine Befestigungsachse (3a) definiert,
- Verbindungsmittel (3), die konfiguriert sind, die Stütze (2) und eine Zahnprothese (10) operativ fest entlang der Befestigungsachse (3a) zu verbinden, wobei mindestens eine Befestigungskonfiguration definiert wird, wobei die Stütze und die Prothese (10) fest miteinander verbunden sind, und die umfassen:
- ein Implantat (4), das mindestens einen ersten Abschnitt (4a) umfasst, der sich hauptsächlich entlang einer Richtung parallel zu der Befestigungsachse (3a) erstreckt,
- einen Körper (5) umfassend eine Führung (50), die sich in einer Querrichtung oder schräg zu der Befestigungsachse (3a) erstreckt und einen Hohlraum (51) umfasst, der sich in einer Richtung parallel zu der Befestigungsachse (3a) erstreckt und geeignet ist, den ersten Abschnitt (4a) aufzunehmen, wenn die Verbindungsmittel (3) sich mindestens in der Befestigungskonfiguration befinden,
- Behinderungsmittel (6) umfassend einen Schieber (60), der auf konforme Weise innerhalb der Führung (50) platziert ist,
- wobei eines des Implantats (4) und des Körpers (5) an der Stütze (2) befestigt ist und das andere zwischen dem Implantat (4) und dem Körper (5) konfiguriert ist, an der Prothese (10) befestigt zu werden,
- wobei der erste Abschnitt (4a) eine Bohrung (40) umfasst, die im Wesentlichen mit der Führung (50) ausgerichtet ist, wenn die Verbindungsmittel (3) sich in der Befestigungskonfiguration befinden, sodass das Einführen des Schiebers (60) in die Bohrung (40) ermöglicht wird,
- wobei die Behinderungsmittel (6) konfiguriert sind, eine Kraft auf dem Schieber (60) zu erzeugen, die in der Lage ist, den Schieber (60) entlang der Führung (50) zu bewegen, sodass mindestens ein Teil des Schiebers (60) in die Bohrung (40) eintritt, wenn die Verbindungsmittel (3) die Befestigungskonfiguration bilden, um die gegenseitige Bewegung zwischen dem Implantat (4) und dem Körper (5) zu behindern;
und wobei die Vorrichtung (1) **dadurch gekennzeichnet ist, dass**:
- die auf den Schieber (60) ausgeübte Kraft eine magnetische Anziehungs- oder Abstoßungskraft ist und die Behinderungsmittel (6) eine Komponente (61) umfassen, die innerhalb des Körpers (5) befestigt ist, sodass sie der Führung (50) gegenüberliegt oder Teil davon ist und konfiguriert ist, die magnetische gegenseitige Anziehungs- oder Abstoßungskraft mit dem Schieber (60) zu erzeugen, sodass der Schieber (60), wenn die Befestigungsmittel (3) sich in der Befestigungskonfiguration befinden, zu oder weg von der Komponente (61) gezogen wird, in die Bohrung (40) eingeführt wird und die gegenseitige Bewegung zwischen dem Implantat (4) und dem Körper (5) behindert.

2. Vorrichtung (1) nach Anspruch 1, wobei die Komponente (61) innerhalb des Körpers (5) befestigt ist, sodass sie der Führung (50) gegenüberliegt und von der Führung (50) durch den Hohlraum (51) getrennt ist und die magnetische Anziehungskraft mit dem Schieber (60) erzeugt.

3. Vorrichtung (1) nach Anspruch 1, wobei die Komponente (61) die Führung (50) schließt oder Teil davon ist und die magnetische Abstoßungskraft mit dem Schieber (60) erzeugt.

4. Vorrichtung (1) nach einem der vorhergehenden Ansprüche, wobei die Bohrung (40) eine Durchgangsbohrung ist, sodass der Schieber (60), wenn die Verbindungsmittel (3) sich in der Befestigungskonfiguration befinden, durch die Bohrung (40) hindurchgeht.

5. Vorrichtung (1) nach einem der vorhergehenden Ansprüche, wobei die Bohrung (40) keine Durchgangsbohrung ist und eine Nut definiert, die auf einer Wand durchgeführt wird, die durch den ersten Abschnitt (4a) gebildet wird.

6. Vorrichtung nach einem der vorhergehenden Ansprüche, wobei der erste Abschnitt (4a) ein keilförmiges freies Ende (41) definiert, das konfiguriert ist, den Schieber (60) und die Komponente (61) oder den Schieber (60) und einen Teil des Körpers (5) zu trennen, wenn der erste Abschnitt (4a) in den Hohlraum (51) eingeführt wird.

7. Vorrichtung nach einem der vorhergehenden Ansprüche, wobei das Implantat (4) mindestens eine erste Klappe (42) umfasst, die eine Wand definiert, die sich in einer Richtung parallel zu der Befestigungsachse (3a) erstreckt und die Bohrung (40) umfasst.

8. Vorrichtung nach einem der vorhergehenden Ansprüche, wobei die Behinderungsmittel (6) den ersten Abschnitt (4a) umfassen, der eine Wand mit einer im Wesentlichen C-oder-U-Schnittform definiert, die senkrecht zu der Befestigungsachse (3a) ist und wobei der Hohlraum (51) gegenförmig zu dem ersten Abschnitt (4a) geformt ist.

9. Vorrichtung nach einem der vorhergehenden Ansprüche, wobei der Schieber (60) eine abgeschrägte Spitzenkante (600) definiert, die konfiguriert ist, die Einführung des freien Endes (41) zwischen dem Schieber (60) und der Komponente (61) oder zwischen dem Schieber (60) und einem Teil des Körpers (5) zu erleichtern.

10. Vorrichtung nach einem der vorhergehenden Ansprüche, wobei die Führung (50) ein zylindrisches Rohr ist, die Bohrung (40) eine konische Körperform aufweist und der Schieber (60) einen zylindrischen Körper umfasst, der mit der Führung (50) und einer konischen Körperspitze kompatibel ist, die konfiguriert ist, in die Bohrung (40) Platz zu finden.

11. Vorrichtung nach einem der vorhergehenden Ansprüche, wobei die Führung (50) ein Rohr mit einer überwiegend quaderförmigen Konfiguration und mit einem rechteckigen Boden ist, die Bohrung (40) eine überwiegend quaderförmige Konfiguration mit einem rechteckigen Boden aufweist und der Schieber (60) im Wesentlichen einen Körper mit einer hauptsächlich quaderförmigen Konfiguration mit einem rechteckigen Boden umfasst, der mit der Führung (50) und der Bohrung (40) kompatibel ist.

12. Vorrichtung nach einem der vorhergehenden Ansprüche, wobei die Führung (50) eine oder mehrere Kerben (500) umfasst und der Schieber (60) eine oder mehrere Flügel (601) umfasst, die konfiguriert sind, auf kontrollierte Weise innerhalb einer oder mehrerer Kerben (500) aufgenommen und bewegt zu werden.

13. Vorrichtung nach einem der vorhergehenden Ansprüche, wobei die Stütze (2) eine Hauptachse (2a) definiert, die mit der vorwiegenden Entwicklungsachse der Stütze (2) zusammenfällt, und wobei das Implantat (4) einen zweiten Abschnitt (4b) umfasst, der ein ringförmiges Element mit einer Durchgangs-Befestigungsbohrung (44) definiert, die entlang der Hauptachse (2a) zentriert ist, wobei die Befestigungsachse (3a) in Bezug auf die Hauptachse (2a) ausgerichtet oder geneigt ist.

## Revendications

1. Dispositif dentaire (1) comprenant au moins :
- un support de type implant (2) configuré pour être contraint sur une partie osseuse d'un utilisateur et définissant un axe de contrainte (3a),
- des moyens de connexion (3) configurés pour interconnecter de manière opérative ledit support (2) et une prothèse dentaire (10) de manière fixe le long dudit axe de contrainte (3a), définissant au moins une configuration de contrainte dans laquelle ledit support et ladite prothèse (10) sont fermement liés, et comprennent :
- une greffe (4) comprenant au moins une première partie (4a) s'étendant principalement dans une direction parallèle audit axe de contrainte (3a),
- un corps (5) comprenant un guide (50) s'étendant dans une direction transversale ou oblique par rapport audit axe de contrainte (3a) et une cavité (51) s'étendant dans une direction parallèle audit axe de contrainte (3a) et adaptée pour loger ladite première partie (4a) au moins lorsque lesdits moyens de connexion (3) sont dans ladite configuration de contrainte, des moyens d'obstruction (6) comprenant un curseur (60) placé de manière conforme à l'intérieur dudit guide (50),
- l'une entre lesdites greffes (4) et ledit corps (5) étant contrainte audit support (2) et l'autre entre ladite greffe (4) et ledit corps (5) étant configurée pour être contrainte à ladite prothèse (10),
- ladite première partie (4a) comprenant un trou (40) sensiblement aligné avec ledit guide (50), lorsque lesdits moyens de connexion (3) sont en configuration de contrainte, de manière à permettre l'insertion dudit curseur (60) dans ledit trou (40),
- lesdits moyens d'obstruction (6) étant configurés pour produire une force sur ledit curseur (60) capable de déplacer ledit curseur (60) le long dudit guide (50) de telle sorte qu'au moins une partie dudit curseur (60) entre dans le trou (40), lorsque lesdits moyens de connexion (3) forment ladite configuration de contrainte, afin d'obstruer le mouvement réciproque entre ladite greffe (4) et ledit corps (5) ; et ledit dispositif (1) étant **caractérisé en ce que** :
- ladite force réalisée sur ledit curseur (60) est une force magnétique d'attraction ou de répulsion et lesdits moyens d'obstruction (6) comprennent un composant (61) contraint à l'intérieur dudit corps (5) de manière à faire face, ou partie, dudit guide (50) et configuré pour réaliser ladite force magnétique d'attraction ou de répulsion mutuelle avec ledit curseur (60) de sorte que, lorsque lesdits moyens de contrainte (3) sont en configuration de contrainte, ledit curseur (60) est entraîné vers ou loin dudit composant (61), il est inséré dans ledit trou (40) et obstrue le mouvement réciproque entre ladite greffe (4) et ledit corps (5).

2. Dispositif (1) selon la revendication 1, dans lequel ledit composant (61) est contraint à l'intérieur dudit corps (5) de manière à faire face audit guide (50) et séparé dudit guide (50) par ladite cavité (51) réalisant ladite force d'attraction magnétique avec ledit curseur (60).

3. Dispositif (1) selon la revendication 1, dans lequel ledit composant (61) ferme ou fait partie dudit guide (50) et réalise ladite force de répulsion magnétique avec ledit curseur (60).

4. Dispositif (1) selon une des revendications précédentes, dans lequel ledit trou (40) est un trou traversant de sorte que, lorsque lesdits moyens de connexion (3) sont en configuration de contrainte, ledit curseur (60) passe à travers ledit trou (40).

5. Dispositif (1) selon une des revendications précédentes, dans lequel ledit trou (40) n'est pas traversant et définit une rainure réalisée sur une paroi définie par ladite première partie (4a).

6. Dispositif selon une des revendications précédentes, dans lequel ladite première partie (4a) définit une extrémité libre en forme de coin (41) configurée pour séparer ledit curseur (60) et ledit composant (61) ou ledit curseur (60) et une partie dudit corps (5) lorsque ladite première partie (4a) est insérée dans ladite cavité (51).

7. Dispositif selon une des revendications précédentes, dans lequel ladite greffe (4) comprend au moins un premier rabat (42) définissant une paroi s'étendant dans une direction parallèle audit axe de contrainte (3a) et comprenant ledit trou (40).

8. Dispositif selon une des revendications précédentes, dans lequel lesdits moyens d'obstruction (6) comprennent ladite première partie (4a) qui définit une paroi avec une forme sensiblement en C ou en U en section perpendiculaire audit axe de contrainte (3a) et ladite cavité (51) est contre-formée par rapport à ladite première partie (4a).

9. Dispositif selon une des revendications précédentes, dans lequel ledit curseur (60) définit un bord d'extrémité biseauté (600) configuré pour faciliter l'introduction de ladite extrémité libre (41) entre ledit curseur (60) et ledit composant (61) ou entre ledit curseur (60) et une portion dudit corps (5).

10. Dispositif selon une des revendications précédentes, dans lequel ledit guide (50) est un tuyau cylindrique, ledit trou (40) a une forme de corps conique et ledit curseur (60) comprend un corps cylindrique compatible avec ledit guide (50) et une extrémité de corps conique configurée pour s'adapter audit trou (40).

11. Dispositif selon une des revendications précédentes, dans lequel ledit guide (50) est un tuyau de forme principalement parallélépipédique avec une base rectangulaire, ledit trou (40) a une forme principalement parallélépipédique avec une base rectangulaire et ledit curseur (60) comprend principalement un corps de forme parallélépipédique avec une base rectangulaire compatible avec ledit guide (50) et avec ledit trou (40).

12. Dispositif selon une des revendications précédentes, dans lequel ledit guide (50) comprend une ou plusieurs encoches (500) et ledit curseur (60) comprend une ou plusieurs ailes (601) configurées pour être logées et translatées de manière contrôlée à l'intérieur d'une ou plusieurs desdites encoches (500).

13. Dispositif selon une des revendications précédentes, dans lequel ledit support (2) définit un axe principal (2a) coïncidant avec l'axe de développement principal dudit support (2) et ladite greffe (4) comprend une seconde portion (4b) définissant un élément annulaire comprenant un trou de fixation traversant (44) centré le long dudit axe principal (2a), ledit axe de contrainte (3a) étant aligné ou incliné par rapport audit axe principal (2a).
